# EUROPÄISCHE PATENTSCHRIFT

(11) **EP 2 577 148 B1**
(45) Veröffentlichungstag und Bekanntmachung des Hinweises auf die Patenterteilung: **05.08.2020**
(21) Anmeldenummer: 11717475.5
(22) Anmeldetag: 30.03.2011
(51) Int. Cl.: F17C 1/06, F17C 1/16

(54) **HOCHDRUCKTANK MIT PERMEATIONSSPERRE**
HIGH-PRESSURE TANK WITH PERMEATION BARRIER
RÉSERVOIR HAUTE PRESSION DOTÉ D'UNE BARRIÈRE ANTI-PERMÉATION

(30) Priorität: 01.06.2010 DE 102010022342
(43) Veröffentlichungstag der Anmeldung: 10.04.2013
(73) Patentinhaber: MT Aerospace AG, 86153 Augsburg (DE)
(72) Erfinder: RADTKE, Wulf, 82153 Planegg (DE)
(74) Vertreter: Grape & Schwarzensteiner
(86) Internationale Anmeldenummer: PCT/EP2011/001607
(87) Internationale Veröffentlichungsnummer: WO 2011/150993

(56) Entgegenhaltungen:
- WO-A1-00/57102
- DE-A1- 2 815 772
- US-A- 5 798 156

## Beschreibung

Die vorliegende Erfindung betrifft Hochdrucktanks für die Aufnahme von Medien, wie Helium (He), Neon (Ne), Argon (Ar), Krypton (Kr), Xenon (Xe) sowie Luft, Sauerstoff (O₂) oder Wasserstoff (H₂). Neben gasförmigen Medien sollen die Tanks auch flüssige, respektive tropfbare Medien aufnehmen können. Die Hochdrucktanks bestehen aus Faserverbundkunststoff und sind mit einer Permeationssperre ausgerüstet. Die Erfindung betrifft auch ein Verfahren zur Herstellung solcher, mit einer Permeationssperre ausgerüsteter Hochdrucktanks.

Hochdrucktanks werden heute fast überwiegend aus Faserverbundkunststoff aufgebaut. Faserverbundkunststoffe können wesentliche Eigenschaften, die für Hochdrucktanks angestrebt werden, wie Leichtigkeit und sowohl mechanische als auch thermische Stabilität vereinen.

Tanks aus Faserverbundkunststoffen sind als solche jedoch nicht notwendigerweise permeationsdicht, will man ihre Dicke und damit ihr Gewicht nicht negativ beeinflussen.

Es ist bereits bekannt, Tanks aus Faserverbundkunststoffen mit einer Permeationssperre auszurüsten. Hierzu kommen im Allgemeinen Kunststoffliner, beispielsweise thermoplastische Linermaterialien zum Einsatz. Kunststoffliner neigen jedoch zu einer Empfindlichkeit gegenüber dehnungsbedingten lokalen Undichtigkeiten an Fehl- und Fügestellen. Ihre Leckrate dürfte um drei Größenordnungen schlechter sein wie beispielsweise die von Metalllinern. Sie kommen daher für Langzeitmissionen mit Helium, beispielsweise in der Raumfahrt, nicht in Frage.

Die US-PS 5,798,156 beschreibt einen leichten, mit einem Liner aus Polymermaterial ausgekleideten Druckgasbehälter. Der Liner ist aus einer dünnen Polymerschicht gebildet, die wiederum mit einer dünnen Schicht aus einem Material mit niedriger Permeabilität, wie Silber, Gold oder Aluminium, beschichtet sein kann oder nicht. Der Polymerliner wird im Zusammenhang mit Druckbehältern für komprimierte Gase aus Graphitepoxidkomposit beschrieben. Die Dichte ρ (ρ = m/V) beträgt im Fall von unbeschichteten Polymerlinern z.B. 0,925 g/cm³ und 1.965 g/cm³, für LDPE (Polyethylen niedriger Dichte) mit einer Goldbeschichtung dagegen 19,29 g/cm³.

Metallliner werden ebenfalls als Permeationssperre eingesetzt. Allerdings weisen Metallliner, die bisher als Permeationssperre dienen könnten, eine Stärke auf, die ein Gewichtsproblem darstellen kann. Das gilt insbesondere, wenn der Hochdrucktank in der Luft- und Raumfahrt Anwendung finden soll.

Metallliner sind beispielsweise aus der DE 28 15 772 A1 bekannt. Es werden unter anderem Nickel-Titan-Legierungen mit einem Titangehalt von 44 bis 47 % vorgeschlagen. Die Wandstärke der Liner wird mit 0,5 mm angegeben.

Die US-PS 3,312,575 schlägt duktiles Nickel als Linermaterial mit einer Wandstärke von 0,76 mm vor. GB 2 270 028 und GB 2 270 089 schlagen Titan als Liner vor und WO 97/28401 schlägt Titanlegierungen als Liner vor.

Im Rahmen der vorliegenden Erfindung sollen Alternativen zu diesem Stand der Technik angeboten werden, die technisch und/oder kommerziell vorteilhaft sind und ein breites Spektrum der Einsatzmöglichkeiten für die Hochdrucktanks zulassen.

Mit anderen Worten, es sollen Hochdrucktanks zur Verfügung gestellt werden, die thermisch und mechanisch hochbelastbar, leicht und zuverlässig permeationsdicht, auch bei kryogenen Temperaturen und bis + 100° C, sind.

Es wurde nun erkannt, dass sich die oben skizzierten Nachteile durch eine Bauweise bzw. Materialauswahl vermeiden lassen, welche die folgenden Kriterien berücksichtigt:
1. Werkstoff mit sehr hohem elastischem Bereich (ε = R_{p0,2}/E) gemäß dem Hooke' schen Gesetz, wobei R_{p0,2} die Streckgrenze und E der Elastizitätsmodul ist;
2. Werkstoff mit möglichst kleinem Wärmeausdehnungskoeffizienten a;
3. Foliendicke;
4. Stoffschlüssiges Fügen mittels beispielsweise Überlapp-, Elektro-, Pressschweißverbindung, wobei das Schließen des Liners den Hauptentwicklungsanteil darstellt.

Ein stoffschlüssiges Fügen kann gegebenenfalls auch durch Kleben oder ähnliche bekannte Methoden erfolgen.

Ziel ist jedenfalls die so weit wie möglich zu treibende Massenverringerung des Liners. Diese ist, abgesehen von der geeigneten Werkstoffwahl für den Liner, durch die Minimierung der Linerdicke zu erreichen.

Dementsprechend wird im Rahmen der vorliegenden Erfindung der Einsatz von ausgewählten Metallfolien vorgeschlagen.

Die vorliegende Erfindung betrifft somit einen mit einer Permeationssperre aus einer Metallfolie einer Dicke von ≤ 0,5 mm ausgerüsteten Hochdrucktank zur Aufnahme von Helium (He), Neon (Ne), Argon (Ar), Krypton (Kr), Xenon (Xe), Luft, Sauerstoff oder Wasserstoff aus faserverstärktem Kunststoff, dadurch gekennzeichnet, dass der Tank an seiner Innenwand ganz oder teilweise mit einer permeationsdichten Metallfolie mit einem hohen elastischen Bereich (ε=K_{p0,2}/E) und einem niedrigen Wärmeausdehnungskoeffizienten α ausgerüstet ist, nämlich aus eine Metallfolie aus 1.3974 (ε=0,25; α=15,5), A286 (ε=0,32; α=17), CuBe (ε=0,90; α=17), Ni-Span C-902 (ε=0,50; α=7,74), Inconel 903 (ε=0,75; α=7,2), Inconel 718 (ε=0,26 - 0,65; α=13,14). Bevorzugte Ausführungsformen ergeben sich jeweils aus den Unteransprüchen.

Die Dicke der permeatiosdichten Metallfolie kann sogar im µm-Bereich. Damit kann sich eine deutliche und vorteilhafte Gewichtsreduktion, bei gleichzeitig zuverlässiger Permeationsdichte für Gase, ergeben.

Die gewählte Metallfolie ist auch für kleinatomige und kleinmolekülige Gase, wie Helium (He) und Stickstoff (N₂), undurchlässig, wodurch der Tank für die Lagerung und den Transport dieser Gase, wie das in der Luft und Raumfahrt erforderlich ist, Anwendung finden kann.

Gemäß Anspruch 2 sollte die Metallfolie vorzugsweise, für die entsprechenden Anwendungsgebiete, auf einer druckwasserstoffbeständigen Metalllegierung basieren, wodurch sichergestellt wird, dass sich die Qualität des Liners auch unter diesen Bedingungen im Lauf der Zeit nicht verändert, insbesondere im Hinblick auf die Permeationsdichte.

Was die obigen Gesichtspunkte 1 und 2 betrifft, so muss folgendes festgehalten werden:
Aluminiumfolien werden als Liner oder Permeationssperren in Betracht gezogen. Obwohl sie einen ziemlich ungünstigen Wärmeausdehnungskoeffizienten besitzen, sind sie für Anwendungsgebiete, in denen dieser Umstand keine Rolle spielt, durchaus geeignet. Sie weisen im Allgemeinen einen ausreichend hohen elastischen Bereich ε auf (vgl. angefügte Tabelle).

Es hat sich aber gezeigt, dass hochfeste Titanlegierungen in dieser Hinsicht am Besten geeignet sind, solange kein Wasserstoff oder kryogene Temperaturen als Einsatzrandbedingungen vorgesehen sind. Hochfeste Spezial-Nickellegierungen erfüllen wegen ihres zugleich geringen Elastizitätsmoduls die Anforderungen an einen hohen elastischen Bereich.

Metallfolien mit geringem Wärmeausdehnungskoeffizient α kann man unter Titan und dessen Legierungen, Eisenlegierungen mit kubisch-raumzentrierter Gitterstruktur, einigen Nickel-Basislegierungen sowie Legierungen mit spezifisch zugemessenem Nickelgehalt (Invar- und Kovarlegierungen) erwarten. Insbesondere bei Letzteren kann ein Minimum an Wärmeausdehnung nur mit Einbußen an der Streckgrenze erkauft werden.

Es hat sich aber gezeigt, dass durch Änderung der Legierungszusammensetzung durch Hinzufügen von weiteren Legierungselementen Werkstoffe mit sehr hoher Streckgrenze R_{p0,2,} vermindertem Elastizitätsmodul E, mithin hohem elastischen Bereich ε und ausgezeichneter Wasserstoff- und Temperaturbeständigkeit zur Verfügung stehen. Solche "high strength (super) alloys" findet man in der angelsächsischen Literatur unter den Bezeichnungen "thermo-span, low expansion, controlled (thermal) expansion, "low coefficient of (thermal) expansion alloys".

Chrom-Nickel-Stähle erfüllen diese Anforderungen nur bedingt.

Wie vorher bereits erwähnt sind Folien aus Aluminium und dessen Legierungen für Anwendungsfälle geeignet, in denen der eher schlechte Wärmeausdehnungskoeffizient keine Rolle spielt. Vorteilhaft ist hier, dass man bis zu einer gewissen Mindestwandstärke, je nach Tankdimension und -geometrie nahtlos geformte Liner herstellen und deren Wanddicke anschließend beispielsweise durch chemisches Fräsen und/oder spanabhebende Bearbeitung kann.

Die gewählte Foliendicke richtet sich nach der Verfügbarkeit einerseits und der Verarbeitbarkeit des Materials andererseits (Umformen, Pressschweißen, Handhabung bei Vorarbeiten zum Wickeln, wie Applizieren der Wickelstütze etc. bzw. beim Wickeln selbst).

Spielen Wasserstoff oder kryogene Temperaturen eine Rolle, ist das bei der Auswahl des Linermaterials gesondert zu berücksichtigen.

In der angefügten Tabelle ist eine Auswahl von als Permeationssperre geeigneten Linerwerkstoffen, die gemäß der vorliegenden Erfindung Verwendung finden können, beispielhaft und ohne jegliche Beschränkung angegeben. Diese Werkstoffe werden als Linermaterial für die erfindungsgemäß ausgebildeten Hochdrucktanks ausdrücklich beansprucht.

Mit den beschriebenen Ausgestaltungen ergeben sich gegenüber der Kunststoffliner-Technologie verschiedene Vorteile und zwar hinsichtlich Masse und Gasdichtheit. Bei gezielter Wahl des Linerwerkstoffs, kann auch Kompatibilität mit extremen Temperaturen und Medien erreicht werden.

Die vorliegende Erfindung betrifft unter einem weiteren Aspekt ein Verfahren zur Herstellung der vorher genannten Hochdrucktanks, wobei man auf einem endformnahen wasserlöslichen Kern die Metallfolie montiert und durch geeignete Methoden fügt, die Oberfläche der Metallfolie mit einem geeigneten Faserverbundmaterial haftend verbindet und nach dem Härten den Kern entfernt.

Ein wasserlöslicher Kern lässt sich problemlos aus jedem wie auch immer gestalteten Tank herauslösen.

Die Herstellung der Metallfolien sowie geeignete Fügemethoden sind im Stand der Technik etablierte Technologien. Sie müssen lediglich dem speziellen Anwendungsfall entsprechend angepasst werden.

Alternative Methoden der Herstellung dünner Liner-Schichten, speziell das Aufbauen aus Flüssigkeiten, Gasen oder Plasma auf der Innenseite der vorab gefertigten Faserverbundhülle, leiden herstellungsbedingt unter einer mangelnden Dichtheit gegenüber Hochdruckgasen bzw. -flüssigkeiten, die aus sehr kleinen und mithin äußerst permeationsfähigen Atomen oder Molekülen, wie beispielsweise Helium (He) und Wasserstoff (H₂), bestehen. Darüber hinaus treten Schwierigkeiten bei der Lokalisierung von herstellungsbedingten Undichtigkeiten auf und es besteht keine einfache Reparaturmöglichkeit.

Wenn man hingegen von Folien ausgeht, so kann man diese vor Verwendung in der Linerfertigung, aber auch während derselben, auf Dichtheit prüfen. Aufgrund typischer, letztlich unvermeidbarer Fehler bei der Folienfertigung, wie Einschleppen/Entstehen von nichtmetallischen Einschlüssen während schmelzmetallurgischer Prozesse, Durchdrücken von Verunreinigungen beim Walzen etc., die beim Auswalzen zu dünnen Folien zu Undichtigkeiten führen, darf eine kritische Foliendicke nicht unterschritten werden. Walztechnologisch gesehen könnte man sehr viel dünnere Folien walzen, die dann jedoch keine ausreichende Dichtheit mehr aufweisen.

Der Liner wird in vorteilhafter Weise aus Einzelteilen erzeugt und dann leckfrei auf dem endformnahen Kern zusammengefügt werden.

Die Fertigung der Einzelteile sowie das Fügen zum Liner beruhen auf bekannten Fertigungstechniken. Die Form der Einzelteile wird durch bekannte Techniken der Blechumformung erzeugt.

Was die Fügetechnik betrifft, so sind stoffschlüssige Verfahren aus Dichtheitsgründen, wegen der geometrischen Kompatibilität und zur Minimierung von Biegespannungen zu bevorzugen. Ob man dabei stumpf- oder überlappstößig arbeitet, hängt von der Werkstoffwahl, der Fügetechnologie und geometrischen Erwägungen ab.

Aus Festigkeitsgründen kommen vorzugsweise die Verfahren Schweißen und Hartlöten in Frage. Beim Schweißen ist nach Schmelzschweißen und Pressschweißen zu unterscheiden Das Schmelzschweißen kann mittels Laser, Elektronenstrahl, Mikroplasma sowie Kombinationen daraus erfolgen. Zum Pressschweißen kann man Rollnaht, Foliennaht, Quetschnaht, Schweißkleben, Ultraschall, Diffusion, Kaltpressschweißen, magnetisches Pressschweißen, Rührreibschweißen sowie Kombinationen daraus in Betracht ziehen.

Der Bau des Liners erfolgt vorzugsweise auf einem Innenkern, weil damit zum einen Kräfte zum Fügen des Liners und danach zum anderen die Kräfte zum Wickeln eines Faserverbunds abgefangen werden können.

Gerade bei Hochdrucktanks kann ein solcher Innenkern jedoch nach dem Wickeln und Härten des Verbundes und bedingt durch die Tankkonstruktion häufig nicht mehr aus dem Tank entnommen werden. Als Kernmaterial wird daher in diesem Fall vorzugsweise ein Werkstoff verwendet, der nach Abschluss der Tankfertigung durch ein Lösungsmittel, z.B. Wasser, herausgelöst werden kann. Ein geeignetes Material ist beispielsweise Aquacore® oder Aquapour®. Das ist ein hochtemperaturbeständiges, pulverartiges Kernmaterial. Es kann zur Herstellung von komplexen Formkernen, z.B. durch Gießen oder Spritzen verwendet werden.

Für den Fall mangelnder Eignung dieses Kernmaterials im Zusammenspiel mit dem anzuwendenden Liner-Fügeprozess (wegen Flächenpressung oder chemischer Inkompatibilität), können auf dem Kern lokale Einsätze aus geeigneterem Material vorgesehen werden. Beispielsweise können direkt unter der Liner-Schließschweißnaht Streifen aus passenden metallischen Werkstoffen angeordnet werden, die im Zuge des Kernauslöseprozesses durch kleine Tanköffnungen herausgezogen werden können.

Abschließend sei angemerkt, dass sich die erfindungsgemäße Ausgestaltung und Herstellung der Hochdrucktanks auf alle Tankformen, wie zylindrische, kugel- oder kegelförmige Dimensionierungen anwenden lässt. Es sind auch beliebige andere, mehrfach gekrümmte Formen vorstellbar. Der Liner ist selbst nicht tragend, sodass die Permeationsdichte gegenüber Gasen ausreichend ist.

## Patentansprüche

1. Mit einer Permeationssperre aus einer Metallfolie einer Dicke von ≤ 0,5 mm ausgerüsteter Hochdrucktank zur Aufnahme von Helium (He), Neon (Ne), Argon (Ar), Krypton (Kr), Xenon (Xe), Luft, Sauerstoff oder Wasserstoff aus faserverstärktem Kunststoff, wobei der Tank an seiner Innenwand ganz oder teilweise mit einer permeationsdichten Metallfolie mit einem hohen elastischen Bereich (ε=R_{p0,2}/E) und einem niedrigen Wärmeausdehnungskoeffizienten α ausgerüstet ist, und **dadurch gekennzeichnet dass**, die Metallfolie aus 1.3974 (ε=0,25; α=15,5), A286 (ε=0,32; α=17), CuBe (ε=0,90; α=17), Ni-Span C-902 (ε=0,50; α=7,74), Inconel 903 (ε=0,75; α=7,2), Inconel 718 (ε=0,26 - 0,65; α=13,14 ) ist.

2. Hochdrucktank gemäß Anspruch 1, **dadurch gekennzeichnet, dass** die Metallfolie druckwasserstoffbeständig ist.

3. Verfahren zur Herstellung eines Hochdrucktanks gemäß einem der Ansprüche 1 oder 2, **dadurch gekennzeichnet, dass** auf einem wasserlöslichen Kern die Metallfolie montiert und gefügt wird, die Oberfläche mit einem für Hochdrucktanks geeigneten Faserverbundmaterial haftend verbunden und nach dem Aushärten der Kern herausgelöst wird.

4. Verfahren nach Anspruch 3, **dadurch gekennzeichnet, dass** die Metallfolie überlappend montiert wird.

## Claims

1. High pressure vessel of fibre reinforced plastics provided with a permeation barrier of a metal foil having a thickness of ≤ 0,5 mm for receiving helium (He), neon (Ne), argon (Ar), krypton (Kr), xenon (Xe), air, oxygen or hydrogen, **characterized in that** the vessel on its inner wall completely or partially is provided with a permeation dense metal foil having a high elastic range (ε=R_{p0,2}/E) and a low thermal extension coefficient α, namely a metal foil of 1.3974 (ε=0,25; α=15,5), A286 (ε=0,32; α=17), CuBe (ε=0,90; α=17), Ni-Span C-902 (ε=0,50; α=7,74), Inconel 903 (ε=0,75; α=7,2), Inconel 718 (ε=0,26 - 0,65; α=13,14).

2. High pressure vessel according to claim 1, characterized the metal foil is hydrogen pressure resistant.

3. Process for producing a high pressure vessel according to anyone of claims 1 or 2, **characterized in that** the metal foil is mounted and joined on a water soluble core, the surface is adhesively bound with die fibre composite material suitable for high pressure vessels and after curing the core is dissolved away.

4. Process according to claim 3, **characterized in that** the metal foil is mounted with lap joints.

## Revendications

1. Réservoir à haute pression équipé d'une barrière anti-perméation constituée d'une feuille métallique d'une épaisseur de < 0,5 mm, destiné à recevoir de l'hélium (He), du néon (Ne), de l'argon (Ar), du krypton (Kr), du xénon (Xe), de l'air, de l'oxygène ou de l'hydrogène, constitué en matière plastique renforcée de fibres, le réservoir étant équipé sur sa paroi intérieure en tout ou en partie d'une feuille métallique étanche à la perméation ayant une plage élastique élevée (ε = R_{p0,2}/E) et un faible coefficient de dilatation thermique α, **caractérisé en ce que** la feuille métallique est en 1.3974 (ε = 0,25; α = 15,5), A286 (ε = 0,32; α = 17), CuBe (ε = 0,90; α = 17), Ni-Span C-902 (ε = 0,50; α = 7,74), Inconel 903 (ε = 0,75; α = 7,2), Inconel 718 (ε = 0,26 - 0,65; α = 13,14).

2. Réservoir à haute pression selon la revendication 1, **caractérisé en ce que** la feuille métallique est résistante à l'hydrogène sous pression.

3. Procédé de réalisation d'un réservoir à haute pression selon l'une des revendications 1 ou 2, **caractérisé en ce que** la feuille métallique est montée et assemblée sur un noyau soluble dans l'eau, la surface est reliée par adhérence à un matériau composite en fibres adapté aux réservoirs à haute pression, et, après durcissement, le noyau est retiré en étant dissout.

4. Procédé selon la revendication 3, **caractérisé en ce que** la feuille métallique est montée en chevauchement.
